# EUROPEAN PATENT APPLICATION

(11) **EP 3 848 724 A1**
(43) Date of publication of application: **14.07.2021**
(21) Application number: 20150860.3
(22) Date of filing: 09.01.2020
(51) Int. Cl.: G01S 13/931, G01S 13/87, G01S 13/86, B60W 30/08, B60W 30/09

(54) **SYSTEM AND METHOD FOR REAR CRASH AVOIDANCE OF VEHICLES**

(71) Applicant: Veoneer Sweden AB, 447 37 Vårgårda (SE)
(72) Inventor: ROTARIU, Catalin, 700051 Iasi (RO)
(74) Representative: Reichert & Lindner Partnerschaft Patentanwälte

(57) **Abstract**

The invention relates to a system (1) and a method for rear crash avoidance of vehicles (3) comprising at least one camera (4) looking in a direction (D) of travel and at least one camera (5) looking against the direction (D) of travel. A data evaluation device (7) receives images or data from the at least one camera (4), looking in a direction (D) of travel, and the at least one camera (5), looking against the direction (D) of travel. An actuation device (9) is provided for initiating at least one signal of the vehicle (3) and/or an operation mode of the vehicle (3).

## Description

### FIELD OF THE INVENTION

The invention relates to a system for rear crash avoidance of vehicles. The system comprises especially at least one camera looking in a direction of travel and at least one camera looking against the direction of travel.

Furthermore, the invention relates to a method for rear crash avoidance of vehicles.

### DESCRIPTION OF THE BACKGROUND ART

US patent application US 2014/309884 A1 discloses a collision avoidance system of a vehicle. The system includes a camera disposed at a vehicle and having a field of view exterior of and rearward of the vehicle. An image processor is operable to process image data captured by the camera. Responsive to image processing of captured image data, the collision avoidance system is operable to determine an approach of a vehicle rearward of the vehicle and to determine an excitation level depending on a difference between the speed of the approaching vehicle and the speed of the equipped vehicle and a distance between the approaching vehicle and the equipped vehicle. Responsive to the determined excitation level, the collision avoidance system may provide an alert to the driver of one or both vehicles, prepare for impact, control a vehicle braking system, vehicle steering system and/or vehicle acceleration system and/or communicate information to the approaching vehicle via a telematics system.

Korean patent application KR 2018/0007211 A relates to a rear collision alert system of a vehicle which comprises an image detection unit which acquires a rear image of the vehicle. Additionally, an image resolution correction unit is provided which corrects a resolution of the rear image acquired by the image detection unit. A distance/speed calculation unit calculates the distance from the vehicle on a rear side and the speed of the vehicle on the rear side. An output unit outputs a certain warning to the driver. The image detection unit includes a stereo camera which acquires two or more images at the same time, thereby allowing the vehicle to drive safely.

Chinese patent application CN 108995584 A discloses a vehicle backward collision avoidance system based on infrared laser assistance, which includes a front infrared laser module, a front camera, a rear infrared laser module, a rear camera, a processor module and an on-board controller module. A processor module and the on-board control module are electrically connected. An image of a beam of infrared light of a particular shape reflected by an obstacle is captured by a camera. The processor module is used for processing the beam images collected by the front camera and the rear camera. When the received signal is an emergency signal, the alarm module is started, and the acceleration actuator module is controlled according to the actual situation, and one of the left-steering actuator module and the right-steering actuator module is successfully implemented to avoid collision.

### SUMMARY OF THE INVENTION

It is an object of the present invention to provide a system for rear crash avoidance of vehicles, which enables a reduction of accidents close to zero.

The above object is achieved by a system for rear crash avoidance of vehicles which comprises the features of claim 1.

It is a further object of the invention to provide a method for rear crash avoidance of vehicles, which enables a reduction of accidents close to zero.

The above object is achieved by a method for rear crash avoidance of vehicles which comprises the features of claim 5.

According to an embodiment of the invention, a system for rear crash avoidance of vehicles comprises at least one camera looking in a direction of travel and at least one camera looking against the direction of travel for a vehicle. Additionally, the inventive system comprises a data evaluation device, which is communicatively connected with the at least one camera looking in the direction of travel and the at least one camera looking against the direction of travel. An actuation device is provided, communicatively connected to the data evaluation device, for initiating at least one signal of the vehicle and/or an operation mode of the vehicle.

The advantage of the system is that from the images taken by the at least one camera looking against the direction of travel of the vehicle, the velocity of the approaching vehicle can be calculated. The driver of the approaching vehicle is alerted or an operation can be initiated in the approaching vehicle, so that an accident is avoided.

A further embodiment of the system comprises, in addition to the cameras, a radar device looking in the direction of travel and a radar device looking against the direction of travel. Preferably, the at least one camera, looking in a direction of travel, and the at least one camera, looking against the direction of travel, and the radar device looking in the direction of travel and the radar device looking against the direction are both short range and long range cameras and radar devices.

The initiating of the at least one signal of running ahead vehicle to the driver of his/her approaching vehicle can comprise: flicker of the brake lights, flicker of the warning lights, flicker of the rear fog light or sound the horn of the vehicle. The actuation device can carry out, on the basis of the data evaluation, an operation mode of the vehicle. The operation mode can comprise taking over vehicle commands (e.g. slow down the vehicle, operating the steering wheel, operating brakes, etc.) or alert the driver of the approaching vehicle via vehicle-to-vehicle communication.

According to one embodiment of the invention, the method for rear crash avoidance of vehicles comprises the steps of: capturing images of an approaching vehicle with at least one camera looking against a direction of travel of a running ahead vehicle; sending the images to a data evaluation device of the running ahead vehicle; and initiating, based on the results of a data evaluation of the data evaluation device, at least one signal of the running ahead vehicle.

According to an additional embodiment of the inventive method, the sensing the approaching vehicle is carried out in, in addition to the camera, with a radar device looking against the direction of the running ahead vehicle. The sensed data are sent to the data evaluation device of the running ahead vehicle. On the basis of the results of the data evaluation, at least one signal of the running ahead vehicle is initiated. The initiating of the at least one signal of running ahead vehicle to the driver of the approaching vehicle can comprise: flicker of the brake lights, flicker of the warning lights, flicker of the rear fog light or sound the horn of the vehicle.

A further embodiment of the method according to the invention is capturing of images of the running ahead vehicle with at least one camera looking in the direction of travel of the approaching vehicle. The images are sent to the data evaluation device of the approaching vehicle. Based on the results of the data evaluation, at least one operation mode of the approaching vehicle is initiated.

In addition to the at least one camera looking in the direction of travel, the sensing of the running ahead vehicle can be carried out with a radar device looking in the direction of travel of the approaching vehicle. The sensed data are sent to the evaluation device of the approaching vehicle. Based on the results of the data evaluation of the data from the radar device and the cameras, at least one operation mode of the approaching vehicle is initiated.

In case a communication is possible with the approaching vehicle it is possible to take over vehicle commands or alerting the driver of the approaching vehicle. The signal of the running ahead vehicle and the taking over of commands depend on the different scenarios and the configuration of the inventive system.

### BRIEF DESCRIPTION OF THE DRAWINGS

The numerous advantages of the disclosure may be better understood by those skilled in the art by reference to the accompanying figures in which:
**Figure 1** is a schematic view of one possible embodiment of the system according to the invention.
**Figure 2** is a schematic view of a further possible embodiment of the system according to the invention.

### DETAILED DESCRIPTION

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

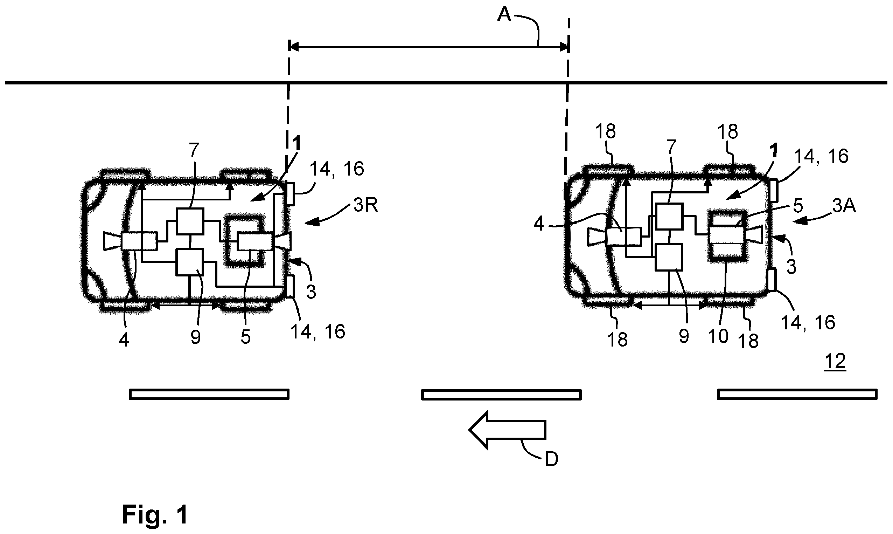

**Fig. 1** shows a schematic view of one possible embodiment of the system 1 according to the invention. The system 1 is implemented in a vehicle 3. The system 1 has at least one camera 4 looking in a direction D of travel and at least one camera 5 looking against the direction D of travel. Both cameras 4 and 5 are connected to a data evaluation device 7. The data evaluation device 7 is communicatively connected with an actuation device 9. The actuation device 9 is responsible for initiating at least one signal of the vehicle 3 and/or an operation mode of the vehicle 3. Additionally, the inventive system 1 can be connected to a communication device 10. With the communication device 10 it is possible to establish a vehicle-to-vehicle communication in order to initiate some warnings or to take over control of the vehicle 3. The control of the vehicle 3 means that commands (e.g. operating the brake, slow down the vehicle 3) can be initiated in one vehicle 3. The cameras 4 and 5 can be configured as short and long range ones.

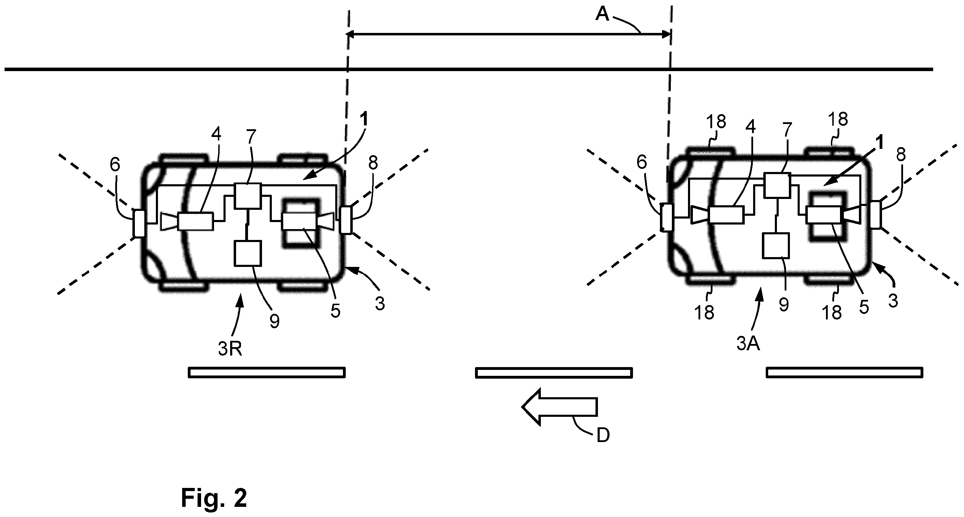

**Figure 2** shows a schematic view of a further possible embodiment of the system 1 according to the invention. In addition to the at least one camera 4 looking in a direction D of travel and at least one camera 5 looking against the direction D of travel, the system encompasses as well a radar device 6 looking in the direction D of travel and a radar device 8 looking against the direction D of travel. The cameras 4 and 5 and the radar devices 6 and 8 are connected to the data evaluation device 7. The data evaluation device 7 determines from the delivered image data (from cameras 4 and 5) and radar data (from radar devices 6 and 8), if, for example, the approaching vehicle 3A is too fast and might not brake in time. In case the rate of the distance A changes at a rate above a predetermined threshold, the communication device 10 can take over vehicle commands or alerting the driver of the approaching vehicle 3A. One possible command could be the operation of the brakes 18 of the approaching vehicle 3A in order to slow down the approaching vehicle 3A.

**Fig. 1** and **Fig. 2** show different embodiments of the implementation of the inventive method which helps to avoid rear crashes of vehicles 3. The inventive method is described with reference to Fig. 1. The only difference to the embodiment of Fig. 2 is the radar device 6 looking in the direction D of travel and a radar device 8 looking against the direction D of travel. The additional radar devices 6 and 8 just provide more data for the evaluation of a potential critical situation.

For example, a running ahead vehicle 3R and an approaching vehicle 3A are traveling at a distance A in a direction D on a road 12. The running ahead vehicle 3R has at least one camera 4, looking in the direction D of travel, and the at least one camera 5, looking against the direction D of travel. The at least one camera 5, looking against the direction D, captures images of the approaching vehicle 3A. The at least one camera 5, looking against the direction D, is connected to the evaluation device 7 and the image data are sent from the at least one camera 5, looking against the direction D to the evaluation device 7. According to the embodiment described, the evaluation device 7 initiates, on the basis of the results of the data evaluation, at least one signal of the running ahead vehicle 3R. The running ahead vehicle 3R and the approaching vehicle 3A are travelling at a distance A. In case, for example, the running ahead vehicle 3R detects, with the at least one camera 5 looking against the direction D of travel, that the approaching vehicle 3A is too fast and the rate of change of distance is above a predefined threshold, the inventive system 1 of the running ahead vehicle 3R initiates the signal.

The signal of the at least one signal initiated by the running ahead vehicle 3R could be a flicker of the brake lights 14, a flicker of the warning lights 16, a flicker of the rear fog light (not shown) or a sound the horn of the running ahead vehicle 3R.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: System
- 3: Vehicle
- 3A: Approaching vehicle
- 3R: Running ahead vehicle
- 4: Camera
- 5: Camera
- 6: Radar device
- 7: Data evaluation device
- 8: Radar device
- 9: Actuation device
- 10: Communication device
- 12: Road
- 14: Brake light
- 16: Warning light
- 18: Brake
- A: Distance
- D: Direction of travel

## Claims

1. A system (1) for rear crash avoidance of vehicles (3) comprising at least one camera (4) looking in a direction (D) of travel and at least one camera (5) looking against the direction (D) of travel;
**characterized by**
a data evaluation device (7) communicatively connected with the at least one camera (4), looking in the direction (D) of travel, and with the at least one camera (5), looking against the direction (D) of travel; and
an actuation device (9) communicatively connected to the data evaluation device (7) for initiating at least one signal of the vehicle (3) and/or an operation mode of the vehicle (3).

2. The system (1) as claimed in claim 1, wherein the system (1) comprises a radar device (6) looking in the direction (D) of travel and a radar device (8) looking against the direction (D) of travel.

3. The system (1) as claimed in any of the preceding claims, wherein the at least one camera (4), looking in the direction (D) of travel, and the at least one camera (5), looking against the direction (D) of travel, and the radar device (6), looking in the direction (D) of travel, and the radar device (8), looking against the direction (D), are both short range and long range cameras (4, 5) and radar devices (6, 8).

4. The system (1) as claimed in any of the preceding claims, wherein the system (1) of the vehicle (3) is provided with a communication device (10) for a vehicle (3) to vehicle (3) communication.

5. Method for rear crash avoidance of vehicles (3) comprising the steps of:
capturing images of an approaching vehicle (3A) with at least one camera (5) looking against a direction (D) of travel of a running ahead vehicle (3R);
sending the images to a data evaluation device (7) of the running ahead vehicle (3R); and
initiating, based on the results of a data evaluation of the data evaluation device (7), at least one signal of the running ahead vehicle (3R).

6. The method as claimed in claim 5 comprising:
sensing the approaching vehicle (3A) with a radar device (8) looking against the direction (D) of the running ahead vehicle (3R);
sending the sensed data to the data evaluation device (7) of the running ahead vehicle (3R); and
initiating, based on the results of the data evaluation, at least one signal of the running ahead vehicle (3R).

7. The method as claimed in any of the claims 5 to 6 comprising:
capturing images of the running ahead vehicle (3R) with at least one camera (4) looking in the direction (D) of travel of the approaching vehicle (3A);
sending the images to the data evaluation device (7) of the approaching vehicle (3A); and
initiating, based on the results of the data evaluation, at least one operation mode of the approaching vehicle (3A).

8. The method as claimed in claim 7 comprising:
sensing the running ahead vehicle (3R) with a radar device (6) looking in the direction (D) of travel of the approaching vehicle (3A);
sending the sensed data to the evaluation device (7) of the approaching vehicle (3A); and
initiating, based on the results of the data evaluation, at least one operation mode of the approaching vehicle (3A).

9. The method as claimed in any of the claims 5 to 8, comprising:
communicating with the approaching vehicle (3A) and taking over vehicle commands or alerting a driver of the approaching vehicle (3A).
